# EUROPEAN PATENT APPLICATION

(11) **EP 3 869 037 A1**
(43) Date of publication of application: **25.08.2021**
(21) Application number: 19840141.6
(22) Date of filing: 25.07.2019
(51) Int. Cl.: F03G 3/00, F03G 7/00, F15B 21/14, F15B 1/02

(54) **INERTIAL ENERGY STORAGE APPARATUS HAVING FUNCTION OF REGULATING PRESSURE OF FLUID AND ENERGY STORAGE METHOD**

(30) Priority: 15.10.2018 CN 201811195099; 24.07.2019 CN 201910673672
(71) Applicant: Huangfu, Huanyu, Lanzhou, Gansu 730030 (CN)
(72) Inventor: Huangfu, Huanyu, Lanzhou, Gansu 730030 (CN)
(74) Representative: Dehns
(86) International application number: PCT/CN2019/097797
(87) International publication number: WO 2020/020314

(57) **Abstract**

An inertial energy storage apparatus having the function of regulating the pressure of a fluid and an energy storage method. The apparatus comprises a vacuum container (1), a pressure regulation container, a pressure transmission component, a kinetic energy recovery unit, and a hydraulic power generation unit. The energy storage method comprises the following steps: providing a fluid, the fluid being specifically a liquid or compressed gas; accelerating the fluid and then decelerating the fluid; when decelerating the fluid, recovering the deceleration kinetic energy of the fluid; and in the process of accelerating or decelerating the fluid, regulating the pressure of the fluid from a first pressure to a second pressure according to the rate of the change of the speed and moving state of the fluid. The energy storage apparatus can regulate the pressure of the fluid during inertial energy storage, and obtains the pressure energy of the fluid after pressure regulation.

## Description

### TECHNICAL FIELD

The present disclosure pertains to the technical field of energy storage, and relates to an inertia-based energy storage device with a fluid pressure regulating function and an energy storage method.

### BACKGROUND

Inertia-based energy storage uses the kinetic energy of an object in motion to store energy. At present, the method of inertia-based energy storage is to store energy mainly by driving a flywheel to rotate at a high speed, and the basic principle thereof is that the flywheel is driven to rotate by an electric motor mechanically coupled with the flywheel, and electrical energy is converted into rotational kinetic energy of the flywheel for storage. When it is necessary to release the energy, a generator mechanically coupled to the flywheel is driven by the flywheel rotating at the high speed to generate electricity, and the kinetic energy stored in the flywheel is converted into electrical energy for output. Acceleration and deceleration of the flywheel enables the storage and utilization of energy. However, inertia-based energy storage using a flywheel has such a disadvantage that, because the flywheel is formed as a solid structure, the flywheel does not have the function of regulating the fluid pressure during either energy storage or energy release.

### SUMMARY

An object of the present disclosure is to provide an inertia-based energy storage device with a fluid pressure regulating function, which can regulate the pressure of fluid during the inertia-based energy storage process and extract the pressure energy of fluid after pressure regulation.

Another object of the present disclosure is to provide an energy storage method working with the above described device.

In order to achieve the above objects, the present disclosure adopts an inertia-based energy storage device with a fluid pressure regulating function, comprising: a vacuum vessel, a pressure regulating vessel, a pressure transmission member, a kinetic energy recovery device and a hydraulic generator. The fluid in the pressure regulating vessel is liquid or compressed gas. The pressure transmission member comprises a first cylinder, a second cylinder, a low pressure piston, a high pressure piston and a transmission lever. The low pressure piston is located in the first cylinder and the high pressure piston is located in the second cylinder. The first cylinder and the second cylinder are arranged on a side wall of the pressure regulating vessel, and the first cylinder is positioned higher than the second cylinder. Outer end surfaces of the low pressure piston and the high pressure piston are provided with piston rods respectively. Upper and lower ends of the transmission lever are movably coupled to the piston rods respectively. A middle part of the transmission lever is rotatably mounted to an outer side wall of the pressure regulating vessel. An outer side of the high pressure piston is provided with an elastic member which is fixed in the second cylinder. The piston rod of the high pressure piston is drivably coupled to the hydraulic generator via a transmission guide rod, and an input of the hydraulic generator is fixedly coupled to the second cylinder. The kinetic energy recovery device, which is an air spring formed by coupling at least an energy storage oil cylinder and high and low pressure vessels, is arranged under the pressure regulating vessel. The vacuum vessel is provided therein with a vertical guide member, and the pressure regulating vessel is slidably mounted on the vertical guide member in the vacuum vessel. The vertical guide member is provided with an electric lifting device for lifting the pressure regulating vessel, a lifting mechanism of the electric lifting device can move up and down along the vertical guide member, and the electric lifting device is located under the pressure regulating vessel. The pressure regulating vessel is a cylindrical vessel.

The present disclosure further adopts an energy storage method working with the inertia-based energy storage device with a fluid pressure regulating function as described above, comprising: providing a fluid which is liquid or compressed gas; accelerating the fluid and thereafter decelerating the fluid; recovering deceleration kinetic energy of the fluid in decelerating the fluid. In the process of accelerating or decelerating the fluid, pressure of the fluid is regulated from a first pressure to a second pressure depending on a rate of change in velocity and a state of motion of the fluid; extracting pressure energy generated in the fluid under the second pressure, if the first pressure is lower than the second pressure after the pressure of the fluid is regulated from the first pressure to the second pressure; or restoring the pressure from the second pressure to the first pressure, and then extracting pressure energy generated in the fluid under the first pressure, if the first pressure is higher than the second pressure after the pressure of the fluid is regulated from the first pressure to the second pressure.

The energy storage method further comprises: converting at least the recovered deceleration kinetic energy of the fluid or at least the extracted pressure energy of the fluid into electrical energy by an electricity generation device during or after the varying-speed motion of the fluid, and transmitting the electrical energy to an electricity consuming terminal through an electricity transmission device;
wherein the fluid is filled into a vessel prior to being accelerated;
wherein accelerating the fluid and thereafter decelerating the fluid comprises: accelerating the fluid by an acceleration system and thereafter decelerating the fluid by a kinetic energy recovery system;
wherein recovering deceleration kinetic energy of the fluid in decelerating the fluid comprises: recovering the deceleration kinetic energy of the fluid by the kinetic energy recovery system in decelerating the fluid;
wherein in the process of accelerating or decelerating the fluid, the pressure of the fluid is regulated from a first pressure to a second pressure depending on the rate of change in velocity and the state of motion of the fluid comprises: in the process of accelerating or decelerating the fluid, the pressure of the fluid is regulated from a first pressure to a second pressure depending on the rate of change in velocity and the state of motion of the fluid by the varying-speed motion of the fluid; and
wherein extracting pressure energy generated in the fluid under the first or second pressure comprises: extracting the pressure energy of the fluid by an energy extracting system.

In the present disclosure, while utilizing the kinetic energy of the fluid for energy storage after the fluid is accelerated, the energy storage device may also utilize the acceleration of the fluid in the process of accelerating or decelerating to regulate the pressure of the fluid itself, so that when the pressure of the fluid is regulated by its acceleration, the pressure energy of the fluid can be extracted and the efficiency of inertia-based energy storage can be further improved. The energy storage device provided by the present disclosure can be widely used in the field of power, electricity and industrial production.

### BRIEF DESCRIPTION OF DRAWINGS

FIG. 1 is a schematic diagram showing the structure of an energy storage device according to the present disclosure.
FIG. 2 is a schematic diagram of a transmission member in the energy storage device according to the present disclosure.
FIG. 3 is a schematic diagram of a lifting mechanism in the energy storage device according to the present disclosure.
FIG. 4 is a schematic diagram of a first operating state of the energy storage device according to the present disclosure.
FIG. 5 is a schematic diagram of a second operating state of the energy storage device according to the present disclosure.
FIG. 6 is a schematic diagram of a third operating state of the energy storage device according to the present disclosure.
FIG. 7 is a schematic diagram of a fourth operating state of the energy storage device according to the present disclosure.

List of reference numerals: 1. vacuum vessel, 2. fixed beam, 3. first energy storage oil cylinder, 4. first high pressure vessel, 5. guide, 6. first cylinder, 7. first piston, 8. upper movable beam, 9. first rocker, 10. first support beam, 11. first pillar, 12. low pressure hose, 13. second cylinder, 14. first check valve, 15. third cylinder, 16. lower movable beam, 17. second check valve, 18. stop valve, 19. high pressure hose, 20. second high pressure vessel, 21. alternating-current generator, 22. first hydraulic motor, 23. first pipeline, 24. base, 25. lifting mechanism, 26. second pipeline, 27. third check valve, 28. second energy storage oil cylinder, 29. fourth check valve, 30. third pipeline, 31. fourth pipeline, 32. first low pressure vessel, 33. reversing valve, 34. third high pressure vessel, 35. electro-hydraulic pump, 36. second low pressure vessel, 37. fifth check valve, 38. fourth cylinder, 39. sixth check valve, 40. first transmission member, 41. second transmission member, 42. second support beam, 43. second pillar, 44. connecting cylinder, 45. second rocker, 46. second piston, 47. small piston head, 48. pin hole, 49. connecting rod, 50. spring, 51. large piston head, 52. transmission guide rod, 53. second hydraulic motor, 54. mounting base, 55. pinion, 56. rack, 57. post rod.

### DESCRIPTION OF EMBODIMENTS

Hereinafter, the present disclosure will be further described with reference to the accompanying drawings and specific embodiments.

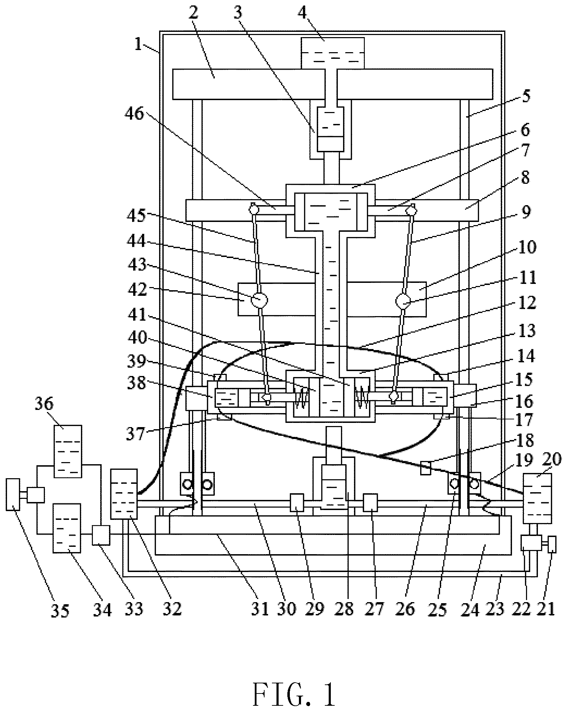

In the present disclosure, as shown in FIG. 1, the energy storage device comprises a base 24 on which two guides 5 are vertically arranged side by side, top ends of the two guides 5 are coupled to each other by a fixed beam 2, a first high pressure vessel 4 is mounted above the fixed beam 2, a first energy storage oil cylinder 3 is mounted on the side wall of the fixed beam 2 facing the base 24, an inner cavity of the first high pressure vessel 4 is in communication with the inner cavity of the first energy storage oil cylinder 3, and the piston rod of the first energy storage oil cylinder 3 faces the base 24.

A second energy storage oil cylinder 28 is vertically mounted on the base 24, and is located between the two guides 5, with the piston rod of the second energy storage oil cylinder 28 facing the fixed beam 2.

In the direction from the fixed beam 2 to the base 24, there are sequentially provided an upper movable beam 8 and a lower movable beam 16, both of which are arranged on the two guides 5 and can move up and down along the guides 5; the upper movable beam 8 and the lower movable beam 16 are located between the first energy storage oil cylinder 3 and the second energy storage oil cylinder 28; the first cylinder 6 is mounted on the upper movable beam 8, and a first piston 7 and a second piston 46 are provided in the first cylinder 6; a piston body of the first piston 7 and a piston body of and the second piston 46 are both arranged in the first cylinder 6, the piston rod of the first piston 7 and the piston rod of the second piston 46 both project outside the first cylinder 6 and are at an angle of 180° from each other, and the center line of the piston rod of the first piston 7 and the center line of the piston rod of the second piston 46 are parallel to the center line of the upper movable beam 8; one end of the piston rod of the first piston 7 projecting outside the first cylinder 6 is hinged to an upper end of the first rocker 9, and one end of the piston rod of the second piston 46 projecting outside the first cylinder 6 is hinged to an upper end of the second rocker 46.

A second cylinder 13 is mounted on the lower movable beam 16 and is coupled to the first cylinder 6 through a cylindrical connecting cylinder 44, an inner cavity of the first cylinder 6, an inner cavity of the connecting cylinder 44 and an inner cavity of the second cylinder 13 are communicated to form an accommodating cavity; a third cylinder 15 and a fourth cylinder 38 are symmetrically fixed to the outer wall of the second cylinder 13; the center line of the third cylinder 15 and the center line of the fourth cylinder 38 are at an angle of 180° from each other and are parallel to the center line of the lower movable beam 16; the third cylinder 15 is provided therein with a second transmission member 41, and the fourth cylinder 38 is provided therein with a first transmission member 40. A first check valve 14 and a second check valve 17 are mounted on the third cylinder 15, and a fifth check valve 37 and a sixth check valve 39 are mounted on the fourth cylinder 38.

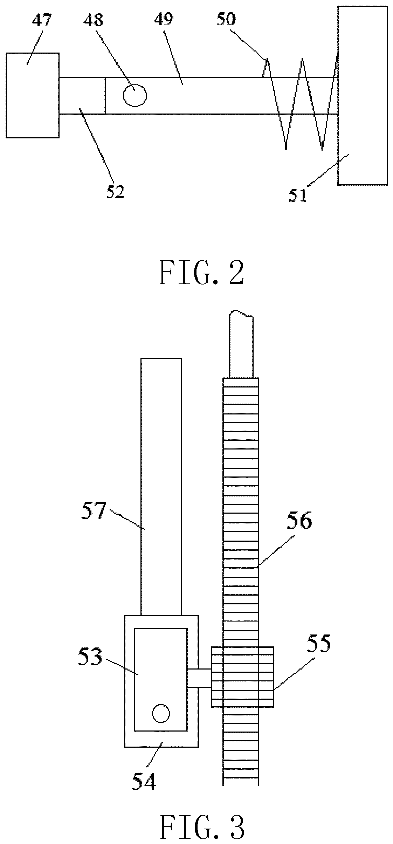

The first transmission member 40 and the second transmission member 41 are identical in structure, thus explanation is given by taking the first transmission member 40 as an example. As shown in FIG. 2, the first transmission member 40 includes a small piston head 47 and a large piston head 51 arranged side by side, the diameter of the large piston head 51 is larger than that of the small piston head 47, the diameter of the small piston head 47 is adapted to the inner diameter of the fourth cylinder 38, the diameter of the large piston head 51 is adapted to the inner diameter of third cylinder 15; the small piston head 47 and the large piston head 51 are coupled by an connecting rod 49 and a transmission guide rod 52 butting each other, the connecting rod 49 is provided with a pin hole 48 and has a spring 50 sleeved thereon.

Both the small piston head 47 and the pin hole 48 of the first transmission member 40 are located within the fourth cylinder 38, both the large piston head 51 and the spring 50 of the first transmission member 40 are located within the second cylinder 13. A first pin shaft is mounted in the pin hole 48 of the first transmission member 40 and is movably coupled to the lower end of the second rocker 45.

Both the small piston head 47 and the pin hole 48 of the second transmission member 41 are located within the third cylinder 15, and both the large piston head 51 and the spring 50 of the second transmission member 41 are located within the second cylinder 13. A second pin shaft is mounted in the pin hole 48 of the second transmission member 41 and is movably coupled to the lower end of the first rocker 9.

A first support beam 10 and a second support beam 42 are symmetrically fixed to the side wall of the connecting cylinder 44, the first support beam 10 is provided with a first pillar 11 capable of rotating back and forth about its own axis, the first pillar 11 is formed with a first mounting hole through which the first rocker 9 passes; the second support beam 42 is provided with a second pillar 43 capable of rotating back and forth about its own axis, and the second pillar 43 is formed with a second mounting hole through which the second rocker 45 passes.

At the lower end of each guide 5 there are mounted two sets of lifting mechanisms 25 with the structure as shown in FIG. 3, the lifting mechanism 25 includes a rack 56 and a mounting base 54, a second hydraulic motor 53 is mounted on the mounting base 54 and drives the pinion 55 to rotate via a transmission mechanism, the pinion 55 and the rack 56 form a rack-and-pinion pair, the rack 56 is fixedly coupled to the guide 5, a post rod 57 is vertically fixed on the mounting base 54, an upper end of the post rod 57 is fixedly coupled to the lower movable beam 16, and all of the second hydraulic motors 53 are in communication with the fourth pipeline 31.

Two opposite side walls of the second energy storage oil cylinder 28 are respectively provided with a second pipeline 26 and a third pipeline 30, a third check valve 27 is mounted on the second pipeline 26, a second high pressure vessel 20 is coupled to the other end of the second pipeline 26, a fourth check valve 29 is mounted on the third pipeline 30, and a first low pressure vessel 32 is coupled to the other end of the third pipeline 30. The second high pressure vessel 20 is in communication with the first low pressure vessel 32 via the first pipeline 23 on which a first hydraulic motor 22 is mounted, which is coupled to an alternating-current generator 21.

All of the second hydraulic motors 53 are coupled to the reversing valve 33 via the fourth pipeline 31, the reversing valve 33 is coupled to the third high pressure vessel 34 and the second low pressure vessel 36 respectively, the third high pressure vessel 34 and the second low pressure vessel 36 are also coupled to an electro-hydraulic pump 35. The second high pressure vessel 20 is coupled to the second check valve 17 and the fifth check valve 37 via a high pressure hose 19 which is provided with a stop valve 18. The first low pressure vessel 32 is coupled to the first check valve 14 and the sixth check valve 39 via a low pressure hose 12.

A vacuum vessel 1 is arranged on the base 24. The fixed beam 2, the first energy storage oil cylinder 3, the first high pressure vessel 4, the guide 5, the first cylinder 6, the upper movable beam 8, the first piston 7, the first rocker 9, the first support beam 10, the second cylinder 13, the first check valve 14, the third cylinder 15, the lower movable beam 16, the second check valve 17, the third check valve 27, the second energy storage oil cylinder 28, the fourth check valve 29, the fifth check valve 37, the fourth cylinder 38, the sixth check valve 39, the first transmission member 40, the second transmission member 41, the second support beam 42, the connecting cylinder 44, the second rocker 45, the second piston 46, the stop valve 18 and all lifting mechanisms 25 are located within the vacuum vessel 1. A portion of the high pressure hose 19, a portion of the low pressure hose 12, a portion of the second pipeline 26, and a portion of the third pipeline 30 are also located within the vacuum vessel 1.

The first cylinder 6, the upper movable beam 8, the connecting cylinder 44, the second cylinder 13, and the lower movable beam16 constitute an energy conversion mechanism.

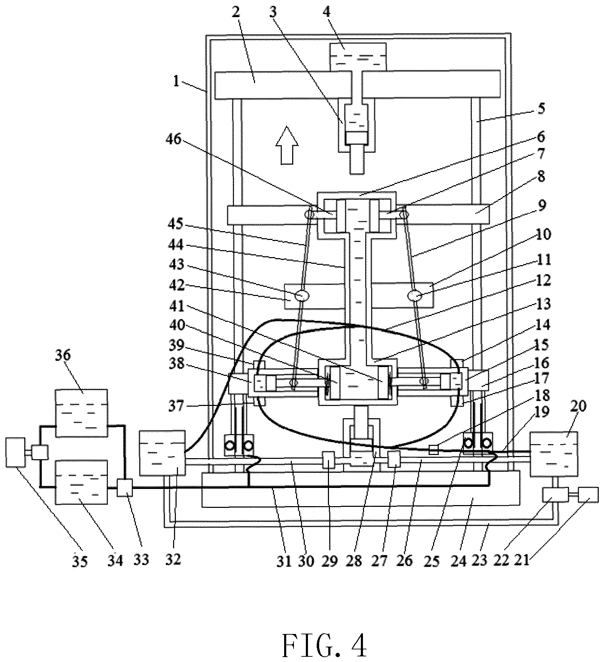

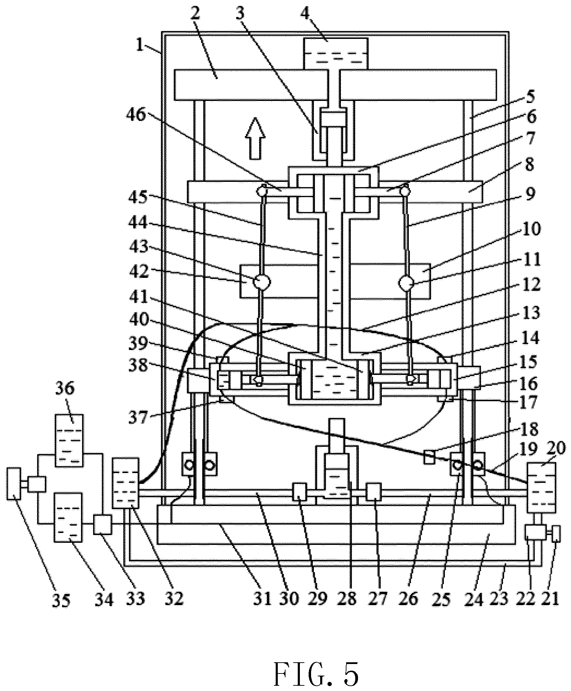

The present disclosure provides an energy storage method working with an inertia-based energy storage device with a fluid pressure regulating function, comprising the following steps:
1) filling a fluid (liquid or compressed gas) into an accommodating cavity formed by the second cylinder 13, the connecting cylinder 44 and the first cylinder 6; wherein the first high pressure vessel 4, the second high pressure vessel 20 and the third high pressure vessel 34 are all filled with high pressure gas and hydraulic oil; both the first low pressure vessel 32 and the second low pressure vessel 36 are filled with low pressure gas and hydraulic oil; the first energy storage oil cylinder 3, the second energy storage oil cylinder 28, the first pipeline 23, the second pipeline 26, the third pipeline 30, the fourth pipeline 31, the low pressure hose 12 and the high pressure hose 19 are all filled up with hydraulic oil;
2) opening the stop valve 18 on the high pressure hose 19 and adjusting the reversing valve 33 to a first reversing state, so that when the reversing valve 33 is in the first reversing state, the fourth pipeline 31 is in communication with the third high pressure vessel 34 through the reversing valve 33, and the fourth pipeline 31 is not in communication with the second low pressure vessel 36; starting the electro-hydraulic pump 35, so that the hydraulic oil in the second low pressure vessel 36 is pumped into the third high pressure vessel 34 by the electro-hydraulic pump 35, meanwhile, the hydraulic oil in the third high pressure vessel 34 enters into all of the second hydraulic motors 53 through the fourth pipeline 31 under the pressure of high pressure gas, the second hydraulic motor 53 drives the pinion 55 to rotate via the transmission mechanism under the pressure of the hydraulic oil, the rotating pinion 55 moves up along the rack 56; in the process of upward moving along the rack 56, the pinion 55 brings the mounting base 54 to move upward along the guide 5 by means of the second hydraulic motor 53, that is, to move in the direction indicated by the arrow in FIG. 4, and the post rod 57 pushes the lower movable beam 16 to move upward, and the lower movable beam 16 pushes the upper movable beam 8 to move upward via the second cylinder 13, the connecting cylinder 44 and the first cylinder 6; in the process of the energy conversion mechanism moving upward, the hydraulic oil in the first low pressure vessel 32 enters into the second energy storage oil cylinder 28 through the third pipeline 30 and the fourth check valve 29 under the pressure of the low pressure gas in the first low pressure vessel 32, at this time, the third check valve 27 is closed, and the hydraulic oil entering the second energy storage oil cylinder 28 pushes the piston rod of the second energy storage oil cylinder 28 upward to the top dead center position as shown in FIG. 5.

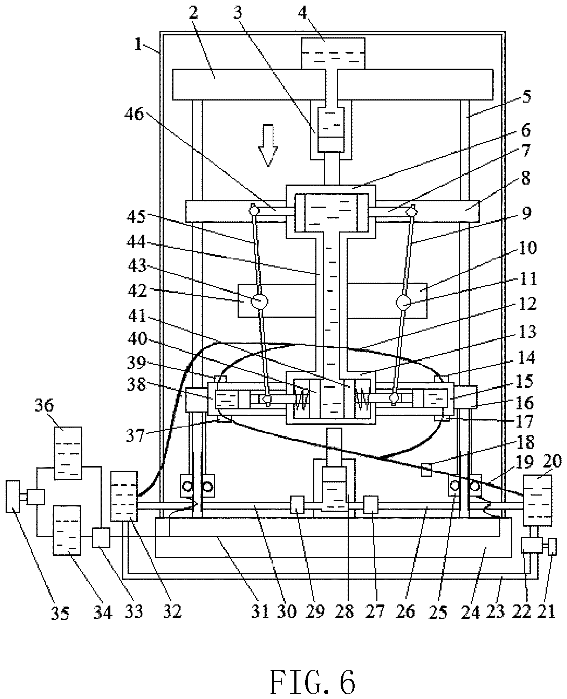

After the first cylinder 6 comes into contact with the piston rod of the first energy storage oil cylinder 3, it pushes the piston rod of the first energy storage oil cylinder 3 to move to the interior of the first energy storage oil cylinder 3, at this time the hydraulic oil in the first energy storage oil cylinder 3 is pressed into the first high pressure vessel 4 until the piston rod of the first energy storage oil cylinder 3 is pushed upward to the top dead center as shown in FIG. 5. At this point, the method further comprises adjusting the reversing valve 33 to a second reversing state, so that when the reversing valve 33 is in the second reversing state , the fourth pipeline 31 is not in communication with the third high pressure vessel 34, and the fourth pipeline 31 is in communication with the second low pressure vessel 36 through the reversing valve 33, at this time the second hydraulic motor 53 instantaneously loses driving pressure from the third high pressure vessel 34, the high pressure hydraulic oil in the first high pressure vessel 4 instantaneously flows to the first energy storage oil cylinder 3, and pushes the piston rod of the first energy storage oil cylinder 3 to move downward, the piston rod pushes the energy conversion mechanism, thereby ejecting the energy conversion mechanism downward, as shown in FIG. 6. In the process that the energy conversion mechanism is ejected downward, the energy conversion mechanism pushes the lifting mechanism 25 via the post rod 57 to move downward and an acceleration is generated, so that the fluid within the accommodating cavity is accelerated, at this time, the pinion 55 is forced to rotate reversely, and the hydraulic oil in the second hydraulic motor 53 is discharged into the second low pressure vessel 36 through the fourth pipeline 31 and the reversing valve 33.

After the piston rod of the first energy storage oil cylinder 3 is moved downward to the bottom dead center, the piston rod is separated from the first cylinder 6, at the same time, the second cylinder 13 collides and comes in contact with the piston rod of the second energy storage oil cylinder 28. The energy conversion mechanism continues to move downward due to inertia, and pushes the piston rod of the second energy storage oil cylinder 28 to move to the interior of the second energy storage oil cylinder 28, so that the hydraulic oil in the second energy storage oil cylinder 28 is pressed into the second high pressure vessel 20 through the third check valve 27 and the second pipeline 26, in this process, the fourth check valve 29 is in a closed state. In the process that the hydraulic oil in the second energy storage oil cylinder 28 is pressed into the second high pressure vessel 20, the energy conversion mechanism is decelerated by the air pressure in the second high pressure vessel 20, so that the fluid within the accommodating cavity is decelerated again after being accelerated. While the fluid within the accommodating cavity is being decelerated, since the hydraulic oil in the second energy storage oil cylinder 28 is pressed into the second high pressure vessel 20 due to the inertia of the energy conversion mechanism and the pressure in the second high pressure vessel 20 is increased, the deceleration kinetic energy of the fluid is recovered by the second high pressure vessel 20 during the deceleration of this fluid within the accommodating cavity.

In the downward acceleration or deceleration of the energy conversion mechanism, the pressure at the lower end of the fluid within the accommodating cavity (i.e., the pressure in the second cylinder 13) changes under the acceleration of the fluid depending on the rate of change in velocity and the state of motion of the fluid. Therefore, in the process of acceleration or deceleration of the fluid, the pressure at the lower end of the fluid changes from the first pressure to the second pressure.

After the pressure at the lower end of the fluid within the accommodating cavity changes from the first pressure to the second pressure, if the first pressure is lower than the second pressure, the pressure energy generated in the fluid under the second pressure is extracted. Specifically, if the acceleration of the energy conversion mechanism during downward acceleration is greater than 1 g (gravitational acceleration), and the negative acceleration thereof during downward deceleration is also greater than 1 g, in the process of downward acceleration of the energy conversion mechanism, the pressure of the fluid within the second cylinder 13 is lower than the pressure of the fluid within the first cylinder 6 due to the acceleration. At this time, the fluid pushes the first piston 7 and the second piston 46 away from each other. The first piston 7 pushes the upper end of first rocker 9 to move away from the second piston 46 during the movement thereof. Since the first rocker 9 passes through the first mounting hole on the first pillar 11, according to the lever principle, the first pillar 11 rotates about its own axis, and the lower end of the first rocker 11 brings the second transmission member 41 to move towards the first transmission member 40. Similarly, the second piston 46 pushes the upper end of second rocker 45 to move away from the first piston 7 during the movement thereof. Since the second rocker 45 passes through the second mounting hole on the second pillar 43, according to the lever principle, the second pillar 43 rotates about its own axis, and the lower end of the second rocker 45 brings the first transmission member 40 to move towards the second transmission member 41, as shown in FIG. 6. In the process that the first transmission member 40 and the second transmission member 41 move towards each other, the volumes of the third cylinder 15 and the fourth cylinder 38 are increase to generate a suction force which sucks the hydraulic oil in the first low pressure vessel 32 into the low pressure hose 12.The hydraulic oil flowing into the low pressure hose 12 is divided into two paths, one of which flows through the first check valve 14 into the third cylinder 15, and the other flows through the sixth check valve 39 into the fourth cylinder 38, and in this process, the second check valve 17 and the fifth check valve 37 are closed.

In the process of downward deceleration of the energy conversion mechanism, the pressure of the fluid within the second cylinder 13 is higher than the pressure of the fluid within the first cylinder 6 due to the overweight effect. At this time, the fluid pushes the first transmission member 40 and the second transmission member 41 away from each other, the hydraulic oil in the third cylinder 15 and the hydraulic oil in the fourth cylinder 38 enter into the high pressure hose 19 through the second check valve 17 and the fifth check valve 37, respectively. At this time, the first check valve 14 and the sixth check valve 39 are closed, and the hydraulic oil entering the high pressure hose 19 is pressed into the second high pressure vessel 20 under pressure.

If, after the pressure at the lower end of the fluid within the accommodating cavity changes from the first pressure to the second pressure, the first pressure is higher than the second pressure, the pressure at the lower end of the fluid is restored from the second pressure to the first pressure firstly, and then pressure energy generated in the fluid under the first pressure is extracted. Specifically, if the acceleration of the energy conversion mechanism during downward acceleration is equal to 1 g, and the negative acceleration thereof during downward deceleration is also equal to 1 g, both the pressure of the fluid within the second cylinder 13 and the pressure of the fluid within the first cylinder 6 drop to the zero pressure state due to the weightlessness effect of the energy conversion mechanism during the downward acceleration. At this time, under the elastic force of the spring 50, the first transmission member 40 and the second transmission member 41 move towards each other, and the first rocker 9 is driven by the second transmission member 41 to rotate clockwise about the axis of the first pillar 11, during rotation the first rocker 9 brings the first piston 7 to move away from the second piston 46, and similarly, the second rocker 45 is driven by the first transmission member 40 to rotate anticlockwise about the axis of the second pillar 43, during rotation the second rocker 45 brings the second piston 46 to move away from the first piston 7.

The stop valve 18 is closed before the process of downward deceleration of the energy conversion mechanism, and is reopened when the energy conversion mechanism completes the downward deceleration movement. When the stop valve 18 is reopened, because the gravity of the fluid in the accommodating cavity has returned to the gravity condition before acceleration, i.e., the non-weightlessness state, the pressure of the fluid within the second cylinder 13 is made higher than the pressure of the fluid within the first cylinder 6 due to gravity of the fluid. At this time, the fluid within the second cylinder 13 pushes the first transmission member 40 and the second transmission member 41 away in opposite directions against the elastic force of the spring 50. The first transmission member 40 drives, by means of the second rocker 45, the second piston 46 to move towards the first piston 7, and the second transmission member 41 drives, by means of the first rocker 9, the first piston 7 to move towards the second piston 46. In this process, the first transmission member 40 presses the hydraulic oil in the fourth cylinder 38 into the high pressure hose 19 through the fifth check valve 37, and the second transmission member 41 presses the hydraulic oil in the third cylinder 15 into the high pressure hose 19 through the second check valve 17, then the hydraulic oil in the high pressure hose 19 is pressed into the second high pressure vessel 20 under pressure.

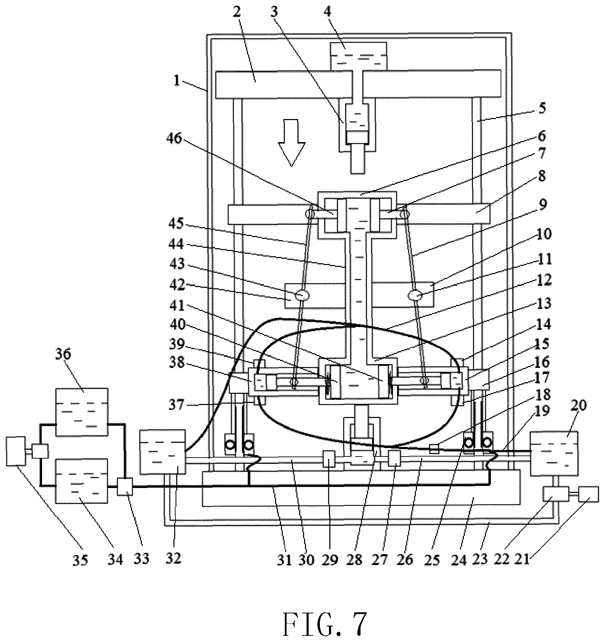

During or after the varying-speed motion of the fluid, at least the recovered deceleration kinetic energy of the fluid or at least the extracted pressure energy of the fluid is converted into electrical energy by an electricity generation device, and the electrical energy is transmitted to an electricity consuming terminal through an electricity transmission device. As shown in FIG. 7, specifically, the hydraulic oil in the high pressure hose 19 is pressed into the second high pressure vessel 20 under pressure, and meanwhile the hydraulic oil in the second energy storage oil cylinder 28 is also pressed into the second high pressure vessel 20. Thereafter, the hydraulic oil in the second high pressure vessel 20 is driven by the air pressure in the second high pressure vessel 20 to flow into the first low pressure vessel 32 through the first hydraulic motor 22 and the first pipeline 23. In the process that the hydraulic oil in the second high pressure vessel 20 flows into the first low pressure vessel 32, the pressure of the hydraulic oil drives the first hydraulic motor 22 to rotate, and the first hydraulic rotor 22 drives the alternating-current generator 21 to generate electricity, and the electrical energy generated by the alternating-current generator 21 is transmitted to an electricity consuming terminal through an electricity transmission system.

The alternating-current generator 21 and the first hydraulic motor 22 constitute a hydraulic generator.

The second energy storage oil cylinder 28, the second pipeline 26, the third pipeline 30, the fourth check valve 29, the third check valve 27, the first low pressure vessel 32, the second high pressure vessel 20 and the first pipeline 23 form the kinetic energy recovery device.

## Claims

1. An inertia-based energy storage device with a fluid pressure regulating function, comprising: a vacuum vessel, a pressure regulating vessel, a pressure transmission member, a kinetic energy recovery device and a hydraulic generator; wherein, the fluid in the pressure regulating vessel is liquid or compressed gas; the pressure transmission member comprises a first cylinder, a second cylinder, a low pressure piston, a high pressure piston and a transmission lever; the low pressure piston is located in the first cylinder and the high pressure piston is located in the second cylinder; the first cylinder and the second cylinder are arranged on a side wall of the pressure regulating vessel, and the first cylinder is positioned higher than the second cylinder; outer end surfaces of the low pressure piston and the high pressure piston are provided with piston rods respectively; upper and lower ends of the transmission lever are movably coupled to the piston rods respectively; a middle part of the transmission lever is rotatably mounted to an outer side wall of the pressure regulating vessel; an outer side of the high pressure piston is provided with an elastic member which is fixed in the second cylinder; the piston rod of the high pressure piston is drivably coupled to the hydraulic generator via a transmission guide rod, and an input of the hydraulic generator is fixedly coupled to the second cylinder; the kinetic energy recovery device is arranged under the pressure regulating vessel, the kinetic energy recovery device is an air spring formed by coupling at least an energy storage oil cylinder and high and low pressure vessels; the vacuum vessel is provided therein with a vertical guide member, and the pressure regulating vessel is slidably mounted on the vertical guide member in the vacuum vessel; the vertical guide member is provided with an electric lifting device for lifting the pressure regulating vessel, a lifting mechanism of the electric lifting device can move up and down along the vertical guide member, and the electric lifting device is located under the pressure regulating vessel; and the pressure regulating vessel is a cylindrical vessel.

2. The inertia-based energy storage device with a fluid pressure regulating function according to claim 1, wherein, the energy storage device comprises a base (24) on which two guides (5) are vertically arranged side by side, top ends of the two guides (5) are coupled to each other by a fixed beam (2), a first high pressure vessel (4) is mounted above the fixed beam (2), a first energy storage oil cylinder (3) is mounted on the bottom side of the fixed beam (2), an inner cavity of the first high pressure vessel (4) is in communication with an inner cavity of the first energy storage oil cylinder (3), and a piston rod of the first energy storage oil cylinder (3) faces the base (24);
a second energy storage oil cylinder (28) is vertically mounted on the base (24), and is located between the two guides (5), with a piston rod of the second energy storage oil cylinder (28) facing the fixed beam (2);
an upper movable beam (8) and a lower movable beam (16) are sequentially provided in the direction from the fixed beam (2) to the base (24), both of which can move up and down along the guides (5); the upper movable beam (8) and the lower movable beam (16) are located between the first energy storage oil cylinder (3) and the second energy storage oil cylinder (28); the first cylinder (6) is mounted on the upper movable beam (8), and a first piston (7) and a second piston (46) are provided in the first cylinder (6); a piston rod of the first piston (7) and a piston rod of the second piston (46) both project outside the first cylinder (6) and are at an angle of 180° from each other; one end of the piston rod of the first piston (7) projecting outside the first cylinder (6) is hinged to an upper end of a first rocker (9), and one end of the piston rod of the second piston (46) projecting outside the first cylinder (6) is hinged to an upper end of a second rocker (46);
the second cylinder (13) is mounted on the lower movable beam (16) and is coupled to the first cylinder (6) through a cylindrical connecting cylinder (44), an inner cavity of the first cylinder (6), an inner cavity of the connecting cylinder (44) and an inner cavity of the second cylinder (13) are communicated to form an accommodating cavity; a third cylinder (15) and a fourth cylinder (38) are symmetrically fixed to an outer wall of the second cylinder (13); the third cylinder (15) is provided therein with a second transmission member (41), the fourth cylinder (38) is provided therein with a first transmission member (40), a first check valve (14) and a second check valve (17) are mounted on the third cylinder (15), and a fifth check valve (37) and a sixth check valve (39) are mounted on the fourth cylinder (38); two support beams are symmetrically fixed to a side wall of the connecting cylinder (44), both of the two support beams are provided with pillars capable of rotating back and forth about their own axis, mounting holes are provided on the pillars, a lower end of the first rocker (9) passes through a mounting hole on one of the pillars to be movably coupled to the second transmission member (41), and a lower end of the second rocker (45) passes through a mounting hole in the other of the pillars to be movably coupled to the first transmission member (40);
two sets of lifting mechanisms (25) are mounted at the lower end of each guide (5), each lifting mechanism is provided with a second hydraulic motor (53), the lifting mechanisms (25) drive an energy conversion mechanism consisting of the first cylinder (6), the upper movable beam (8), the connecting cylinder (44), the second cylinder (13) and the lower movable beam (16) to move upward along the guides (5);
two opposite side walls of the second energy storage oil cylinder (28) are provided with a second pipeline (26) and a third pipeline (30) respectively, a third check valve (27) is mounted on the second pipeline (26), a second high pressure vessel (20) is coupled to the other end of the second pipeline (26), a fourth check valve (29) is mounted on the third pipeline (30), and a first low pressure vessel (32) is coupled to the other end of the third pipeline (30); the second high pressure vessel (20) is in communication with the first low pressure vessel (32) via a first pipeline (23) on which a first hydraulic motor (22) is mounted, the first hydraulic motor (22) is coupled to an alternating-current generator (21);
all of the second hydraulic motors (53) are coupled to a reversing valve (33) via a fourth pipeline (31), the reversing valve (33) is coupled to a third high pressure vessel (34) and a second low pressure vessel (36) respectively, the third high pressure vessel (34) and the second low pressure vessel (36) are also coupled to an electro-hydraulic pump (35); the second high pressure vessel (20) is coupled to the second check valve (17) and the fifth check valve (37) via a high pressure hose (19), the high pressure hose (19) is provided with a stop valve (18), the first low pressure vessel (32) is coupled to the first check valve (14) and the sixth check valve (39) via a low pressure hose (12);
the vacuum vessel (1) is arranged on the base (24), and all components except the second high pressure vessel (20), the alternating-current generator (21), the first hydraulic motor (22), the first pipeline (23), the fourth pipeline (31), the first low pressure vessel (32), the reversing valve (33), the third high pressure vessel (34), the electro-hydraulic pump (35), the second low pressure vessel (36), a portion of the high pressure hose (19), a portion of the low pressure hose (12), a portion of the second pipeline (26) and a portion of the third pipeline (30) are located within the vacuum vessel (1).

3. The inertia-based energy storage device with a fluid pressure regulating function according to claim 2, wherein, the first transmission member (40) comprises a small piston head (47) and a large piston head (51) arranged side by side, the diameter of the large piston head (51) is larger than that of the small piston head (47), the diameter of the small piston head (47) is adapted to the inner diameter of the fourth cylinder (38), the diameter of the large piston head (51) is adapted to the inner diameter of third cylinder (15); the small piston head (47) and the large piston head (51) are coupled by an connecting rod (49) and the transmission guide rod (52) butting each other, the connecting rod (49) is provided with a pin hole (48) and has a spring (50) sleeved thereon; both the small piston head (47) and the pin hole (48) are located within the fourth cylinder (38), both the large piston head (51) and the spring (50) are located within the second cylinder (13), a first pin shaft is mounted in the pin hole (48) and is movably coupled to the lower end of the second rocker (45).

4. The inertia-based energy storage device with a fluid pressure regulating function according to claim 2, wherein, the lifting mechanism (25) comprises a rack (56) and a mounting base (54), the second hydraulic motor (53) is mounted on the mounting base (54) and drives a pinion (55) to rotate via a transmission mechanism, the pinion (55) and the rack (56) form a rack-and-pinion pair, the rack (56) is fixedly coupled to the guide (5), a post rod (57) is vertically fixed to the mounting base (54), the rack (56) is fixedly coupled to the guide (5), an upper end of the post rod (57) is fixedly coupled to the lower movable beam (16), and all of the second hydraulic motors (53) are in communication with the fourth pipeline (31).

5. An energy storage method working with the inertia-based energy storage device with a fluid pressure regulating function according to claim 1, comprising: providing a fluid which is liquid or compressed gas; accelerating the fluid and thereafter decelerating the fluid; recovering deceleration kinetic energy of the fluid in decelerating the fluid; wherein in the process of accelerating or decelerating the fluid, pressure of the fluid is regulated from a first pressure to a second pressure depending on a rate of change in velocity and a state of motion of the fluid; extracting pressure energy generated in the fluid under the second pressure, if the first pressure is lower than the second pressure after the pressure of the fluid is regulated from the first pressure to the second pressure; or restoring the pressure from the second pressure to the first pressure, and then extracting pressure energy generated in the fluid under the first pressure, if the first pressure is higher than the second pressure after the pressure of the fluid is regulated from the first pressure to the second pressure.

6. An energy storage method working with the inertia-based energy storage device with a fluid pressure regulating function according to claim 2, comprising:
1) filling the fluid into the accommodating cavity formed by the second cylinder (13), the connecting cylinder (44) and the first cylinder (6), wherein the first high pressure vessel (4), the second high pressure vessel (20) and the third high pressure vessel (34) are all filled with high pressure gas and hydraulic oil, the first low pressure vessel (32) and the second low pressure vessel (36) are both filled with low pressure gas and hydraulic oil, and the first energy storage oil cylinder (3), the second energy storage oil cylinder (28), the first pipeline (23), the second pipeline (26), the third pipeline (30), the fourth pipeline (31), the low pressure hose (12) and the high pressure hose (19) are all filled up with hydraulic oil;
2) opening the stop valve (18) on the high pressure hose (19) and adjusting the reversing valve (33) to a first reversing state, so that the fourth pipeline (31) is in communication with the third high pressure vessel (34) through the reversing valve (33), and the fourth pipeline (31) is not in communication with the second low pressure vessel (36); starting the electro-hydraulic pump (35), so that the hydraulic oil in the second low pressure vessel (36) is pumped into the third high pressure vessel (34) by the electro-hydraulic pump (35), meanwhile, the hydraulic oil in the third high pressure vessel (34) enters into all of the second hydraulic motors (53) through the fourth pipeline (31) under the pressure of high pressure gas, the second hydraulic motor (53) drives the pinion (55) to rotate via the transmission mechanism under the pressure of the hydraulic oil, the rotating pinion (55) moves up along the rack (56) and brings the mounting base (54) to move upward along the guide (5) by means of the second hydraulic motor (53), and the post rod (57) pushes the energy conversion mechanism to move upward; wherein in the process of the energy conversion mechanism moving upward, the hydraulic oil in the first low pressure vessel (32) enters into the second energy storage oil cylinder (28) through the third pipeline (30) and the fourth check valve (29) under the pressure of the low pressure gas in the first low pressure vessel (32), at this time, the third check valve (27) is closed, and the hydraulic oil entering the second energy storage oil cylinder (28) pushes the piston rod of the second energy storage oil cylinder (28) upward to a top dead center position; and
wherein after the first cylinder (6) comes into contact with the piston rod of the first energy storage oil cylinder (3), it pushes the piston rod of the first energy storage oil cylinder (3) to move to the interior of the first energy storage oil cylinder (3), at this time the hydraulic oil in the first energy storage oil cylinder (3) is pressed into the first high pressure vessel (4) until the piston rod of the first energy storage oil cylinder (3) is pushed upward to the top dead center, and at this point, the method further comprises adjusting the reversing valve (33) to a second reversing state, so that the fourth pipeline (31) is not in communication with the third high pressure vessel (34), and the fourth pipeline (31) is in communication with the second low pressure vessel (36) through the reversing valve (33), at this time the second hydraulic motor (53) instantaneously loses driving pressure from the third high pressure vessel (34), the high pressure hydraulic oil in the first high pressure vessel (4) instantaneously flows to the first energy storage oil cylinder (3), and pushes the piston rod of the first energy storage oil cylinder (3) to move downward, the piston rod pushes the energy conversion mechanism, thereby ejecting the energy conversion mechanism downward, in the process that the energy conversion mechanism is ejected downward, the energy conversion mechanism pushes the lifting mechanism (25) via the post rod (57) to move downward and an acceleration is generated, so that the fluid within the accommodating cavity is accelerated, at this time, the pinion (55) is forced to rotate reversely, and the hydraulic oil in the second hydraulic motor (53) is discharged into the second low pressure vessel (36) through the fourth pipeline (31) and the reversing valve (33);
wherein after the piston rod of the first energy storage oil cylinder (3) is moved downward to a bottom dead center, the piston rod is separated from the first cylinder (6), at the same time, the second cylinder (13) collides and comes in contact with the piston rod of the second energy storage oil cylinder (28), the energy conversion mechanism continues to move downward due to inertia and pushes the piston rod of the second energy storage oil cylinder (28) to move to the interior of the second energy storage oil cylinder (28), so that the hydraulic oil in the second energy storage oil cylinder (28) is pressed into the second high pressure vessel (20) through the third check valve (27) and the second pipeline (26), in this process, the fourth check valve (29) is in a closed state; in the process that the hydraulic oil in the second energy storage oil cylinder (28) is pressed into the second high pressure vessel (20), the energy conversion mechanism is decelerated by the air pressure in the second high pressure vessel (20), so that the fluid within the accommodating cavity is decelerated again after being accelerated; while the fluid within the accommodating cavity is being decelerated, the hydraulic oil in the second energy storage oil cylinder (28) is pressed into the second high pressure vessel (20), so that the pressure in the second high pressure vessel (20) is increased and the deceleration kinetic energy of the fluid is recovered by the second high pressure vessel (20);
wherein in the downward acceleration or deceleration of the energy conversion mechanism, the pressure at the lower end of the fluid within the accommodating cavity changes under the acceleration of the fluid depending on the rate of change in velocity and the state of motion of the fluid, so that the pressure of the fluid changes from the first pressure to the second pressure;
wherein the method further comprises extracting pressure energy generated in the fluid under the second pressure, if the first pressure is lower than the second pressure after the pressure at the lower end of the fluid within the accommodating cavity changes from the first pressure to the second pressure, wherein, if the acceleration of the energy conversion mechanism during downward acceleration is greater than 1 g and the negative acceleration thereof during downward deceleration is also greater than 1 g, the pressure of the fluid within the second cylinder (13) is lower than the pressure of the fluid within the first cylinder (6) due to the acceleration in the process of downward acceleration of the energy conversion mechanism, therefore the fluid pushes the first piston (7) and the second piston (46) away from each other, the first piston (7) pushes the upper end of the first rocker (9) to move away from the second piston (46) during the movement thereof, and the lower end of the first rocker (11) brings the second transmission member (41) to move towards the first transmission member (40); the second piston (46) pushes the upper end of the second rocker (45) to move away from the first piston (7) during the movement thereof, and the lower end of the second rocker (45) brings the first transmission member (40) to move towards the second transmission member (41), in the process that the first transmission member (40) and the second transmission member (41) move towards each other, the volumes of the third cylinder (15) and the fourth cylinder (38) are increased to generate a suction force which sucks the hydraulic oil in the first low pressure vessel (32) into the low pressure hose (12), the hydraulic oil flowing into the low pressure hose (12) is divided into two paths, one of which flows through the first check valve (14) into the third cylinder (15), and the other flows through the sixth check valve (39) into the fourth cylinder (38), and in this process, the second check valve (17) and the fifth check valve (37) are closed;
wherein in the process of downward deceleration of the energy conversion mechanism, the pressure of the fluid within the second cylinder (13) is higher than the pressure of the fluid within the first cylinder (6) due to the overweight effect, therefore the fluid pushes the first transmission member (40) and the second transmission member (41) away from each other, the hydraulic oil in the third cylinder (15) and the hydraulic oil in the fourth cylinder (38) enter into the high pressure hose (19) through the second check valve (17) and the fifth check valve (37), respectively, at this time, the first check valve (14) and the sixth check valve (39) are closed; and the hydraulic oil entering the high pressure hose (19) is pressed into the second high pressure vessel (20) under pressure;
wherein the method further comprises restoring the pressure of the fluid from the second pressure to the first pressure, and then extracting pressure energy generated in the fluid under the first pressure, if the first pressure is higher than the second pressure after the pressure of the fluid within the accommodating cavity changes from the first pressure to the second pressure, wherein, if the acceleration of the energy conversion mechanism during downward acceleration is equal to 1 g, and the negative acceleration thereof during downward deceleration is also equal to 1 g, both the pressure of the fluid within the second cylinder (13) and the pressure of the fluid within the first cylinder (6) drop to the zero pressure state due to the weightlessness effect of the energy conversion mechanism during the downward acceleration, at this time, under the elastic force of a spring (50), the first transmission member (40) and the second transmission member (41) move towards each other, and the first rocker (9) is driven by the second transmission member (41) to rotate clockwise about the axis of the first pillar (11), during rotation, the first rocker (9) brings the first piston (7) to move away from the second piston (46); and the second rocker (45) is driven by the first transmission member (40) to rotate anticlockwise about the axis of the second pillar (43), during rotation, the second rocker (45) brings the second piston (46) to move away from the first piston (7); and
wherein the method further comprises closing the stop valve (18) before the downward deceleration of the energy conversion mechanism, and reopening the stop valve (18) when the energy conversion mechanism completes the downward deceleration movement, at this time the pressure of the fluid within the second cylinder (13) is higher than the pressure of the fluid within the first cylinder (6), the fluid pushes the first transmission member (40) and the second transmission member (41) to move in opposite directions, the first transmission member (40) drives, by means of the second rocker (45), the second piston (46) to move towards the first piston (7), the second transmission member (41) drives, by means of the first rocker (9), the first piston (7) to move towards the second piston (46), and in this process, the hydraulic oil in the fourth cylinder (38) is pressed into the high pressure hose (19) through the fifth check valve (37), the hydraulic oil in the third cylinder (15) is pressed into the high pressure hose (19) through the second check valve (17), the hydraulic oil in the high pressure hose (19) is pressed into the second high pressure vessel (20) under pressure; meanwhile, the hydraulic oil in the second energy storage oil cylinder (28) is also pressed into the second high pressure vessel (20), and thereafter, the hydraulic oil in the second high pressure vessel (20) is driven by the air pressure in the second high pressure vessel (20) to flow into the first low pressure vessel (32) through the first hydraulic motor (22) and the first pipeline (23); in the process that the hydraulic oil in the second high pressure vessel (20) flows into the first low pressure vessel (32), the pressure of the hydraulic oil drives the first hydraulic motor (22) to rotate, and the first hydraulic rotor (22) drives the alternating-current generator (21) to generate electricity, and the electrical energy generated by the alternating-current generator (21) is transmitted to an electricity consuming terminal through an electricity transmission system.
